# EUROPÄISCHE PATENTANMELDUNG

(11) **EP 3 239 219 A1**
(43) Veröffentlichungstag der Anmeldung: **01.11.2017**
(21) Anmeldenummer: 17170255.8
(22) Anmeldetag: 16.11.2011
(51) Int. Cl.: C08J 5/24, B32B 5/28, B32B 7/06, B32B 27/12, B32B 27/30, B32B 27/32, B32B 27/36, B29C 70/08, C08J 7/04

(54) **FORMTEILE AUS FASERVERSTÄRKTEN MATERIALIEN MIT LACKIERTEN OBERFLÄCHEN UND ZWISCHENPRODUKT BEI DER HERSTELLUNG**

(30) Priorität: 22.11.2010 DE 102010061739
(62) Teilanmeldung aus: 11791490.3
(71) Anmelder: Karl Wörwag Lack- Und Farbenfabrik GmbH & Co. KG, 70435 Stuttgart (DE)
(72) Erfinder: WARTA, Helge, 71254 Ditzingen (DE); FÄRBER, Peter, 71116 Gärtringen (DE)
(74) Vertreter: Patentanwaltskanzlei Cartagena

(57) **Zusammenfassung**

Ein Formteil aus einem Faserverbundwerkstoff mit einer lackierten Oberfläche umfasst einen Grundkörper aus einem Faserverbundwerkstoff, eine erste Lackschicht unmittelbar auf dem Grundkörper und eine zweite Lackschicht aus einem pigmentierten Flüssiglack auf der ersten Lackschicht. Ein bei der Herstellung des Formteils auftretendes Zwischenprodukt umfasst den Grundkörper aus dem Faserverbundwerkstoff und eine Oberfläche aus einem Schichtverbund, der eine Trägerfolie umfasst, die einseitig mit einem ersten Lack beschichtet ist, wobei die Lackseite des Schichtverbunds in flächigem Kontakt mit dem Grundkörper steht und die Trägerfolie des Schichtverbunds unter Freilegung des ersten Lacks von dem hergestellten Formteil abziehbar ist.

## Beschreibung

Die vorliegende Erfindung betrifft Formteile aus faserverstärkten Materialien mit lackierten Oberflächen sowie bei der Herstellung der Formteile erhaltene Zwischenprodukte.

Zur Substitution metallischer Werkstoffe sind insbesondere im Automobilbereich faserverstärkte Verbundwerkstoffe (kurz Faserverbundwerkstoffe) als alternative Werkstoffe getestet und eingesetzt worden. Faserverbundwerkstoffe lassen sich grundsätzlich recht einfach herstellen und verarbeiten. Auch komplexe Formgebungen sind ohne Schwierigkeiten realisierbar. Problematisch ist allerdings die Lackierung von Formteilen aus solchen Verbundwerkstoffen. Faserverbundwerkstoffe werden in aller Regel aus Faser-Matrix-Halbzeugen hergestellt. Diese bestehen meist aus einer noch nicht ausgehärteten Kunststoffmatrix sowie aus Fasern, die in diese Matrix eingelagert sind. Die Verarbeitung solcher Faser-Matrix-Halbzeuge erfolgt häufig in der Pressform eines Presswerkzeugs, in der das Halbzeug in eine vorgegebene Form überführt und gleichzeitig die Matrix ausgehärtet wird.

Dabei kommt es allerdings vor, dass Fasern (gegebenenfalls trotz eingesetzter Trennmittel) an Wandungen der Pressform des Presswerkzeugs anhaften und deshalb nicht vollständig in die entstehende ausgehärtete Kunststoffmatrix eingebettet sind. Diese Fasern können von der im Presswerkzeug gebildeten Oberfläche des Formteils abstehen, die Oberfläche ist deshalb nur sehr schwierig zu lackieren. Die eingesetzten Trennmittel können ebenfalls zu einer schwierig lackierbaren Oberfläche führen. Um Formteile aus Faserverbundwerkstoffen mit hochwertigen Lackierungen zu überziehen, müssen die Oberflächen der Formteile daher üblicherweise abgeschliffen werden. Durch diesen Vorgang werden häufig Poren offengelegt, welche ebenfalls schwer lackierfähig sind. Aus diesen Gründen ist die Verwendung von Mehrfachgrundierungen mit Zwischenschliff durchaus nicht unüblich.

Der vorliegenden Erfindung lag die Aufgabe zugrunde, lackierte Formteile aus Faserverbundwerkstoffen bereitzustellen, die sich sehr einfach herstellen lassen.

Diese Aufgabe wird gelöst durch das Formteil mit den Merkmalen des Anspruchs 1 und das Zwischenprodukt mit den Merkmalen des Anspruchs 4.

Die Herstellung erfindungsgemäßer Formteile aus Faserverbundwerkstoffen mit einer lackierten Oberfläche kann gemäß einem Verfahren mit den folgenden Schritten erfolgen:
- Bereitstellung eines Faser-Matrix-Halbzeugs: Wie die oben erwähnten Verfahren geht auch das hier beschriebene Verfahren von Faser-Matrix-Halbzeugen aus, wie sie aus dem Stand der Technik bekannt sind. Auf besonders bevorzugte Faser-Matrix-Halbzeuge wird noch im Detail eingegangen.
- Bereitstellung eines Schichtverbunds, der eine Trägerfolie umfasst, die einseitig mit einem ersten Lack beschichtet ist: Bei der Implementierung eines solchen Schichtverbunds in einem Verfahren zur Herstellung von Formteilen aus Faserverbundwerkstoffen handelt es sich um ein Kernmerkmal der vorliegenden Erfindung. Derartige Schichtverbünde sind beispielsweise in der von der Anmelderin eingereichten internationalen Anmeldung mit der Publikationsnummer WO 2009/024310 A2 (Aktenzeichen PCT/EP2008/006765) beschrieben. Gegebenenfalls weisen sie neben der Schicht aus dem ersten Lack noch weitere Lackschichten auf. Sie zeichnen sich insbesondere dadurch aus, dass sich die erwähnte Trägerfolie von der oder den darauf befindlichen Lackschichten ablösen lässt, selbst wenn diese bereits thermisch und/oder mit UV vollständig gehärtet ist oder sind. Die Trägerfolie dient also gegebenenfalls nur als "Transfermedium", mittels der ein Lack auf ein Substrat transferiert werden kann. Dies kann grundsätzlich auch im vorliegend beschriebenen Verfahren so gehandhabt werden, hierzu aber später noch mehr.
- Flächiges Inkontaktbringen des Faser-Matrix-Halbzeugs mit der Lackseite des Schichtverbundes unter Druck und/oder Temperatur: In diesem Schritt wird aus dem Schichtverbund und dem Faser-Matrix-Halbzeug ein Formteil erhalten, das einen Grundkörper aus einem Faserverbundwerkstoff aufweist und eine Oberfläche, die aus dem Schichtverbund gebildet ist. Dabei liegt die Trägerfolie des Schichtverbundes außen. Die Trägerfolie nimmt in diesem Verfahrensschritt auch die Funktion der sonst üblicherweise eingesetzten Trennmittel wahr. Die Trägerfolie kann entsprechend unter Freilegung des ersten Lacks von dem hergestellten Formteil abgezogen werden.

In bevorzugten Ausführungsformen erfolgt das Abziehen der Trägerfolie unmittelbar in einem Folgeschritt des beschriebenen Verfahrens, in der Regel nach Abkühlen des Formteils. In besonders bevorzugten Ausführungsformen wird anschließend noch ein zweiter Lack auf den ersten Lack aufgetragen.

Die beschriebene Vorgehensweise bietet deutliche Vorteile gegenüber den aus dem Stand der Technik bekannten Vorgehensweisen. Überraschenderweise hat sich herausgestellt, dass die nach dem Abziehen der Trägerfolie freigelegte Oberfläche aus dem ersten Lack sehr hochwertig ist. Abstehende Fasern, wie sie eingangs beschrieben wurden, konnten nicht beobachtet werden. Dies galt immer dann, wenn ein Schichtverbund eingesetzt wurde, bei dem die Schicht aus dem ersten Lack bereits vollständig ausgehärtet war und deshalb auch nicht von den Fasern des Halbzeugs durchdrungen werden konnte. Unter einem vollständig ausgehärteten Lack soll im Rahmen der vorliegenden Anmeldung übrigens verstanden werden, dass der Lack im Wesentlichen keine thermisch oder durch aktinische Strahlung vernetzbaren Gruppen mehr aufweist.

Sofern in dem angesprochenen weiteren Verfahrensschritt eine Überlackierung des ersten Lacks mit dem erwähnten zweiten Lack erfolgt, kommt dem ersten Lack eine Funktion als Grundierung zu. Die eingangs erwähnten separaten, der Herstellung eines Verbundwerkstoffs nachgeschalteten Grundierungs- und gegebenenfalls Schteifschritte sind somit überflüssig.

Als erster Lack weist der verwendete Schichtverbund bevorzugt eine Lackschicht auf, die bereits ausgehärtet ist, also keine durch Strahlung und/oder Wärme vernetzbare Komponenten und auch kein Lösungsmittel mehr enthält. Besonders bevorzugt weist der verwendete Schichtverbund als erster Lack eine gehärtete Lackschicht auf Basis von Polyurethan auf. Besonders bevorzugt kommt auch hier ein aus einer Polyurethandispersion hergestellter Lack zum Einsatz. Geeignet sind beispielsweise polyesterbasierende Polyurethandispersionen. Weiterhin sehr gut geeignet sind auch die in der WO 2009/024310 A2 beschriebenen Lacke umfassend eine doppelbindungshaltige, OH-funktionelle Komponente A, eine doppelbindungshaltige, NCO-funktionelle Komponente B und gegebenenfalls eine doppelbindungshaltige Komponente C, wobei es sich bei Komponente A bevorzugt um ein Polyol und bei den Komponenten B und C bevorzugt um Urethanacrylate handelt. Betreffend bevorzugte Merkmale und Eigenschaften solcher Lacke wird auf den Inhalt der WO 2009/024310 A2 verwiesen, welcher hiermit durch Bezugnahme vollumfänglich zum Inhalt der vorliegenden Beschreibung gemacht wird.

Der zweite Lack kann grundsätzlich frei gewählt werden. Er sollte natürlich chemisch kompatibel mit dem ersten Lack sein. Bevorzugt handelt es sich bei dem zweiten Lack um einen pigmentierten Flüssiglack.

Natürlich ist es denkbar, dass auch noch der zweite Lack mit einem oder mehreren weiteren Lacken überlackiert wird, beispielsweise mit einem Klarlack.

Auch betreffend geeignete Trägerfolien kann auf die WO 2009/024310 A2 verwiesen werden. Bevorzugt handelt es sich bei der Trägerfolie um eine einschichtige Folie oder eine mehrschichtige Verbundfolie. Geeignet sind grundsätzlich alle Folien mit Release-Eigenschaften, insbesondere mit Release-Eigenschaften gegen polyurethanbasierte Klebstoffe und Lacke. Es können sowohl tiefziehfähige als auch nicht tiefziehfähige Folien verwendet werden.

Bevorzugt besteht die Trägerfolie im Wesentlichen aus Kunststoff, insbesondere aus Fluorpolymeren wie Ethylen-Tetrafluorethylen (ETFE), Polyethylenterephthalat, Polyolefin, Polycarbonat, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/ Polycarbonat (ASA/PC), Polyacrylat, Polystyrol, Polycarbonat/Polybutylenterephthalat (PC/PBT) und /oder Polymethylmethacrylat.

Besonders bevorzugt weist ein in dem beschriebenen Verfahren eingesetzter Schichtverbund eine Trägerfolie aus einer Polyolefin Folie auf.

In bevorzugten Ausführungsformen kann der in dem Verfahren zum Einsatz kommende Schichtverbund eine haftvermittelnde Schicht umfassen, die auf der Schicht aus dem ersten Lack angeordnet ist. Die Schicht aus dem ersten Lack ist dann zwischen der haftvermittelnden Schicht und der Trägerfolie angeordnet. Beim Aufbringen wird der Schichtverbund dann mit der haftvermittelnden Schicht voran mit dem Faser-Matrix-Halbzeug in Kontakt gebracht.

Geeignete haftvermittelnde Schichten sind dem Fachmann grundsätzlich bekannt und können in Abhängigkeit der chemischen Zusammensetzung der Matrix des Faser-Matrix-Halbzeugs und des ersten Lacks gezielt ausgewählt werden. In bevorzugten Ausführungsformen wird die haftvermittelnde Schicht derart gewählt, dass ihre haftvermittelnden Eigenschaften bei der beim Schritt des flächigen Inkontaktbringens des Faser-Matrix-Halbzeugs mit der Lackseite des Schichtverbundes gewählten Temperatur aktiviert werden. Bei Raumtemperatur ist die Schicht bevorzugt trocken und nicht klebrig. Bevorzugt ist die haftvermittelnde Schicht wie die Schicht aus dem ersten Lack bereits ausgehärtet. Sie enthält entsprechend vorzugsweise keine thermisch oder durch aktinische Strahlung vernetzbaren Gruppen mehr. Ihre haftvermittelnden Eigenschaften sind bevorzugt ausschließlich durch Erwärmung aktivierbar.

Das Inkontaktbringen des Faser-Matrix-Halbzeugs mit der Lackseite des Schichtverbundes kann beispielsweise durch Hinterspritzen oder Hinterschäumen erfolgen. In bevorzugten Ausführungsformen erfolgt das Inkontaktbringen des Faser-Matrix-Halbzeugs mit der Lackseite des Schichtverbundes jedoch in einem Presswerkzeug unter gleichzeitiger dreidimensionaler Formgebung des Halbzeuges. Presswerkzeuge zur Herstellung von Formteilen aus Faserverbundstoffen sind dem Fachmann bekannt. In der Regel umfassen sie zwei oder mehr Presselemente mit zueinander komplementärem Profil, welche die eigentliche Pressform bilden. Die Innenkonturen der Pressform definieren die äußere Form des herzustellenden Formteils. Zur Herstellung des Formteils mit dem Grundkörper aus dem faserverstärktem Material und der aus dem Schichtverbund gebildeten Oberfläche wird zunächst der Schichtverbund in das Presswerkzeug eingelegt, so dass die Folienseite des Schichtverbundes zur Werkzeugseite bzw. zur Wandung der Pressform weist. Vor der Kontaktierung mit dem Faser-Matrix-Halbzeug sollte der Schichtverbund idealerweise an die Innenkonturen der Pressform angepasst werden. DieserVorgang kann z.B. vakuumunterstützt erfolgen. Durch Anlegen eines Unterdrucks kann die Luft zwischen dem Schichtverbund und der Wandung der Pressform entfernt werden, so dass sich die Trägerfolie eng an die Innenkonturen der Pressform anlegen kann. Danach wird die Pressform mit dem Faser-Matrix-Halbzeug befüllt, das dann nur noch mit der Lackseite des Schichtverbundes in Kontakt treten kann.

In der Regel ist es üblich, die Innenwandungen von Pressformen vor Pressvorgängen mit einem Trennmittel zu versehen, um zu gewährleisten, dass sich hergestellte Formteile der Pressform problemlos entnehmen lassen. Entsprechende Trennmittel sind dem Fachmann bekannt. Überraschenderweise wurde beobachtet, dass die Trägerfolie die Funktion von sonst benötigten Trennmitteln übernehmen kann. Das beschriebene Verfahren zeichnet sich entsprechend auch dadurch aus, dass ein Presswerkzeug verwendet wird, das frei von einem herkömmlichen Trennmittel ist.

Das in dem Verfahren verwendete Faser-Matrix-Halbzeug weist bevorzugt eine thermoplastische oder duroplastische Matrix auf. Geeignete Matrixmaterialien sind beispielsweise Epoxid- oder Polyurethansysteme. Als Fasern umfasst es in bevorzugten Ausführungsformen Glas- und/oder Kohlenstofffasern. Faser-Matrix-Halbzeuge können sowohl eine feste als auch eine teigartige Konsistenz aufweisen. Feste Faser-Matrix-Halbzeuge liegen überwiegend in Band- oder Plattenform vor. In dem beschriebenen Verfahren werden bevorzugt Faser-Matrix-Halbzeuge verwendet, die Verstärkungsfasern in flächiger Form, beispielsweise in Form einer Matte, aufweisen. Die Fasern sind dabei bevorzugt in einer aushärtbaren Kunststoffmatrix eingebettet, die unter Einwirkung von Druck und Temperatur aushärten kann. Geeignete Drücke und Temperaturen können in geeigneten Presswerkzeugen ohne Probleme erzeugt werden. Presswerkzeuge mit beheizbaren Pressformen gehören zum Stand der Technik.

Mit dem beschriebenen Verfahren hergestellte oder herstellbare Formteile sind Gegenstand der vorliegenden Erfindung. Sie bestehen aus einem Faserverbundwerkstoff und weisen eine lackierte Oberfläche auf, die eine Schicht aus dem oben beschriebenen ersten Lack und auf dieser ersten Lackschicht noch eine zweite Lackschicht aufweist. Betreffend bevorzugte Ausführungsformen der verwendeten Lacke und des Faserverbundwerkstoffs wird auf die obigen Ausführungen Bezug genommen.

Auch das bei der Herstellung der erfindungsgemäßen Formteile auftretende Zwischenprodukt umfassend einen Grundkörper aus einem Faserverbundwerkstoff, wie er oben beschrieben wurde, und eine Oberfläche aus dem oben beschriebenen Schichtverbund ist Gegenstand der vorliegenden Erfindung.

Weitere Merkmale der Erfindung ergeben sich auch aus der nun folgenden Beschreibung einer bevorzugten Ausführungsform in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

Zur Herstellung eines erfindungsgemäß einsetzbaren Schichtverbundes wurden 250 Gewichtsteile Füllstoffpaste mit 20 Gewichtsteilen Butylglycol, 50 Gewichtsteilen demineralisiertem Wasser, 305 Gewichtsteilen Polyurethandispersion und 20 Gewichtsteilen Polyesterpolyol-Emulsion gemischt. Die dabei entstehende Mischung wurde fünf Minuten gerührt, danach erfolgte die Zugabe von weiteren 320 Gewichtsteilen Füllstoffpaste, 25 Gewichtsteilen Polyesterpolyol-Emulsion und zur Viskositätseinstellung weiteren 10 Gewichtsteilen demineralisiertem Wasser. Die entstehende Lackmischung ließ man 16 Stunden reifen, danach wurde ihr pH-Wert mit Dimethylethylamin (DMEA) auf einen Wert zwischen 8 und 9 eingestellt.

Nach Bereitstellung einer Trägerfolie (wahlweise einer Polyolefin- oder Polyethylenterephthalatfolie) wurde die hergestellte Lackmischung als erster Lack auf eine Seite dieser Folie aufgerakelt und anschließend bei erhöhten Temperaturen ausgehärtet. Es entstand ein Schichtverbund umfassend die Trägerfolie und den darauf aufgebrachten ersten Lack.

Zur Herstellung eines erfindungsgemäßen Formteils wurde der so hergestellte Schichtverbund in ein beheiztes Presswerkzeug eingelegt, so dass die Trägerfolie des Schichtverbundes zur Werkzeugseite bzw. zur Wandung der Pressform wies. Auf den Einsatz eines Trennmittels wurde verzichtet. Durch Anlegen eines Unterdrucks wurde die Luft zwischen der Folie und der Wandung der Pressform entfernt. Danach wurde die Pressform mit einem Faser-Matrix-Halbzeug breiartiger Konsistenz befüllt. Die Pressform wurde geschlossen. Während des Pressvorgangs härtete die Matrix des Faser-Matrix-Halbzeugs aus. Das dabei entstehende Formteil wurde aus der Form entnommen und einigen mechanischen Nachbearbeitungsschritten (Entgraten, Konturfräsen etc.) unterzogen. Danach wurde die Trägerfolie entfernt, wobei die Schicht aus dem ersten Lack freigelegt wurde. Diese wurde mit einem Flüssiglack als zweiter Lack überlackiert. Es wurde eine Lackoberfläche der Qualität "Automobil class A" erhalten.

## Patentansprüche

1. Formteil aus einem Faserverbundwerkstoff mit einer lackierten Oberfläche, **gekennzeichnet durch**
a. einen Grundkörper aus einem Faserverbundwerkstoff,
b. eine erste Lackschicht unmittelbar auf dem Grundkörper und
c. eine zweite Lackschicht aus einem pigmentierten Flüssiglack auf der ersten Lackschicht.

2. Formteil nach Anspruch 1, **gekennzeichnet durch** mindestens eines der folgenden zusätzlichen Merkmale:
a. Eine dritte Lackschicht aus einem Klarlack auf der zweiten Lackschicht und/oder
b. Eine haftvermittelnde Schicht zwischen dem Grundkörper und dem ersten Lack.

3. Formteil nach Anspruch 1 oder nach Anspruch 2, **gekennzeichnet durch** mindestens eines der folgenden zusätzlichen Merkmale:
a. Der erste Lack ist ausgehärtet, enthält also keine durch Strahlung und/oder Wärme vernetzbaren Komponenten und auch klein Lösungsmittel mehr.
b. Der erste Lack ist eine gehärtete Lackschicht auf Basis von Polyurethan.
c. Der erste Lack umfasst eine doppelbindungshaltige, OH-funktionelle Komponente und eine NCO-funktionelle Komponente.

4. Zwischenprodukt bei der Herstellung eines lackierten Formteils gemäß einem der vorhergehenden Ansprüche, umfassend
a. einen Grundkörper aus einem Faserverbundwerkstoff, und
b. eine Oberfläche aus einem Schichtverbund, der eine Trägerfolie umfasst, die einseitig mit einem ersten Lack beschichtet ist,
wobei die Lackseite des Schichtverbunds in flächigem Kontakt mit dem Grundkörper steht und die Trägerfolie des Schichtverbunds unter Freilegung des ersten Lacks von dem hergestellten Formteil abziehbar ist.

5. Zwischenprodukt nach Anspruch 4, **gekennzeichnet durch** mindestens eines der folgenden zusätzlichen Merkmale:
a. Der erste Lack ist ausgehärtet, enthält also keine durch Strahlung und/oder Wärme vernetzbaren Komponenten und auch klein Lösungsmittel mehr.
b. Der erste Lack ist eine gehärtete Lackschicht auf Basis von Polyurethan.
c. Der erste Lack umfasst eine doppelbindungshaltige, OH-funktionelle Komponente und eine NCO-funktionelle Komponente.

6. Zwischenprodukt nach Anspruch 5, **gekennzeichnet durch** das folgende zusätzliche Merkmal:
a. Zwischen dem Grundkörper und dem ersten Lack ist eine haftvermittelnde Schicht angeordnet.
